Europäisches Patentamt

European Patent Office

Office européen des brevets

(19)

(11) Veröffentlichungsnummer: **0 000 918**
**B1**

(12) **EUROPÄISCHE PATENTSCHRIFT**

(45) Veröffentlichungstag der Patentschrift: **17.03.82**

(51) Int. Cl.³: **C 08 G 63/22,**
**C 08 G 63/00**

(21) Anmeldenummer: **78100670.5**

(22) Anmeldetag: **16.08.78**

(54) **Verfahren zur Herstellung von linearen hochmolekularen Polyestern.**

(30) Priorität: **24.08.77 DE 2738093**
**27.01.78 DE 2803530**

(43) Veröffentlichungstag der Anmeldung:
**07.03.79 Patentblatt 79/5**

(45) Bekanntmachung des Hinweises auf die Patenterteilung:
**17.03.82 Patentblatt 82/11**

(84) Benannte Vertragsstaaten:
**BE CH DE FR GB NL**

(56) Entgegenhaltungen:
**DE - A - 1 920 945**
**DE - A - 1 959 455**
**FR - A - 1 545 487**
**US - A - 3 640 962**

**CHEMICAL ABSTRACTS, vol. 73, no. 12, 21**
**Sept. 1970,**
**Columbus, Ohio, USA**

(73) Patentinhaber: **BASF Aktiengesellschaft**
**Carl-Bosch-Strasse 38**
**D-6700 Ludwigshafen (DE)**

(72) Erfinder: **Sterzel, Hans-Josef, Dr.**
**Haardtstrasse 13**
**D-6701 Dannstadt-Schauernheim 1 (DE)**
Erfinder: **Von Dziembowski, Kasimir**
**Mannheimer Strasse 18a**
**D-6710 Frankenthal (DE)**
Erfinder: **Pirzer, Hans, Dr.**
**Wildstrasse 22**
**D-6710 Frankenthal (DE)**

(56) Entgegenhaltungen:
**FISYUK, L. T.: GRAIZEL, L. A.: "Intensification**
**of the poly condensation stage during the**
**production of poly(ethylene terephthalate),**
**Seite 39,1 e Spalte, Zusammenfassung 57003q**
**KHIM. VOLOKNA 1970, (3) 70—1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# 0 000 918

## Verfahren zur Herstellung von linearen hochmolekularen Polyestern

Gegenstand der Erfindung ist ein Verfahren zur Herstellung von hochmolekularen linearen Polyestern, die sich von Dicarbonsäuren oder deren esterbildenden Derivaten und Diolen ableiten und die zu mindestens 50 Mol% aus Polyethylen- oder Polybutylenterephthalat-Einheiten bestehen, durch Kondensation von Polyestervorkondensaten mit einer relativen Viskosität von mindestens 1,05 bei Temperaturen von 270 bis 340°C unter vermindertem Druck.

Bei der Herstellung von hochmolekularen linearen Polyestern werden niedrig molekulare Vorkondensate mit niedriger Viskosität bei Temperaturen von 260 bis 300°C unter vermindertem Druck unter Abspaltung von Diolen in hochmolekulare Kondensate übergeführt. Bei den hohen erforderlichen Temperaturen sind Polyesterschmelzen jedoch instabil, was sich in einem erhöhten Carboxylendgruppengehalt auswirkt. Bei dem aus der DE—B 17 45 541 bekannten Verfahren wird das Polyestervorkondensat durch eine horizontale Vorrichtung, die in Kammern unterteilt ist, geleitet, wobei in jeder Kammer die Schmelze zu einem dünnen Film geformt wird. Das Verfahren hat den Nachteil, daß es erhebliche Zeit, z.B. mehrere Stunden, in Anspruch nimmt und fortlaufend die im Film gebildete höherkondensierte Schmelze wieder in den Sumpf mit niedrigerem Molekulargewicht zurückgeführt wird. Aus der DE—A 19 59 455 ist ferner ein Verfahren bekannt, bei dem die kondensierende Schmelze über eine Folge übereinander angeordneter Zonen geleitet wird, wobei die kondensierende Masse in jeder Zone zirkuliert und dabei abwechselnd mit der Heizwand in Berührung kommt und von Zone zu Zone unter Schwerkraft und Filmbildung fließt. Das Verfahren hat den Nachteil, daß sich innerhalb der einzelenen Zonen Toträume ausbilden, die zur Rückvermischung führen. Ferner hat das Verfahren den Nachteil, daß bei besonders empfindlichen Polyestern die Kondensationszeit immer noch zuviel Zeit in Anspruch nimmt. Das aus der FR—A 15 45 487 bekannte Verfahren, bei dem man die kondensierende Schmelze über eine Mehrzahl von rotierenden geneigten Flächen leitet, benötigt für die Kondensation immer noch etwa 30 Minuten. Es ist bemerkenswert, daß bei sämtlichen Verfahren die Temperatur entweder auf gleichem Niveau gehalten wird oder mit zunehmender Viskosität gesteigert wird.

Es war deshalb die technische Aufgabe gestellt, bei der Herstellung von hochmolekularen linearen Polyestern die Kondensation so durchzuführen, daß ein Minimum an Zeit beansprucht wird und auch bei empfindlichen Polyestern ein möglichst niedriger Gehalt an Carboxylendgruppen erzielt wird.

Diese technische Aufgabe wird gelöst in einem Verfahren zur Herstellung von hochmolekularen linearen Polyestern, die sich von Dicarbonsäuren oder deren esterbildenden Derivaten und Diolen ableiten und die zu wenigstens 50 Mol% aus polyethylen- oder Polybutylenterephthalat-Einheiten bestehen, durch Kondensation von Polyestervorkondensaten mit einer relativen Viskosität von mindestens 1,05, bei Temperaturen von 270 bis 340°C unter vermindertem Druck, wobei man während der Kondensation die Temperatur erniedrigt, dadurch gekennzeichnet, daß man das Polyestervorkondensat kurzzeitig auf eine Temperatur von 290 bis 340°C erhitzt und dann durch Verdampfen des freigesetzten Diols unter einem Druck von 0,133 bis 2,66 mbar die Temperatur um 30 bis 50°C erniedrigt mit der Maßgabe, daß die Endtemperatur mindestens 10°C über dem Schmelzpunkt des hergestellten Polyesters liegt.

Das neue Verfahren hat den Vorteil, daß die Kondensation in kürzerer Zeit als bisher verläuft. Ferner hat das neue Verfahren den Vorteil, daß selbst bei empfindlichen Polyestern, wie Polybutylenterephthalat sehr niedrige Carboxylendgruppengehalte erzielt werden.

Das neue Verfahren ist insofern bemerkenswert als die Kondensation bei fortlaufend sinkender Temperatur durchgeführt wird. Im Hinblick auf die DE—A 19 20 954 und die FR—A 15 45 487 war davon auszugehen, daß man kurze Verweilzeiten nur mit ansteigender Temperatur erzielt.

Die hochmolekularen linearen Polyester leiten sich ebenso wie die Polyestervorkondensate ab von Dicarbonsäuren oder deren esterbildenden Derivaten, wie Alkylestern. Bevorzugt sind aliphatische und/oder aromatische Dicarbonsäuren mit einem Molekulargewicht <390. Besonders bevorzugte Dicarbonsäuren haben außer der Carboxylgruppe Kohlenwasserstoffstruktur. Besondere technische Bedeutung haben Alkandicarbonsäuren mit 5 bis Kohlenstoffatomen oder Benzol- oder Naphthalindicarbonsäuren, insbesondere solche, die sich vom Benzol ableiten, erlangt. Insbesondere ist Terephthalsäure hervorzuheben. Geeignete Ausgangsstoffe sind beispielsweise Glutarsäure, Adipinsäuren, Sebacinsäure, Terephthalsäure, Isophthalsäure, Bernsteinsäure, Napthalin-2,6-dicarbonsäure, 4,4'-Diphenyldicarbonsäure 4,4'-Diphenoxydicarbonsäure oder deren $C_1$- bis $C_4$-Alkylester.

Bevorzugte Diole sind aliphatische, cycloaliphatische oder aromatische Diole mit einem Molekulargewicht <280. Sie haben vorzugsweise, abgesehen von den Hydroxylgruppen, Kohlenwasserstoffstruktur. Besondere technische Bedeutung haben Alkandiole, insbesondere solche mit 2 bis 6 Kohlenstoffatomen, erlangt, Geeignete Diole sind beispielsweise Ethylenglykol, Propylenglykol, Butandiol-1,4, Hexandiol-1,6, Pentandiol-1,5, Decamethylenglykol, Neopentylglykol oder 1,4-Bis-hydroxymethylcyclohexan. Besondere Bedeutung haben Ethylenglykol und Butandiol-1,4 erlangt.

Die Polyester und auch deren Vorkondensate bestehen zu wenigstens 50 Mol% aus Polyethylenterephthalat oder Polybutylenterephthalat-Einheiten. Der Rest kann auch aus anderen kurzkettigen Polyester-Einheiten bestehen, die sich von den vorgenannten Polyester bildenden Ausgangsstoffen herleiten. Besonders bevorzugt sind Polyester, die zu 70 bis 100 Mol% aus Polyethylen oder Polybutylenterephthalat bestehen. Besondere Bedeutung hat das Verfahren nach der Erfindung für die Herstellung von Polybutylenterephthalat erlangt.

Die Polyestervorkondensate erhält man in an sich bekannter Weise durch Umsetzen von Dicarbonsäuren oder deren Estern mit einem Diol in Gegenwart von Katalysatoren wie Titansäureestern, Antimon-, Mangan- oder Zinkverbindungen, z.B. deren fettsaure Salze, bei Temperaturen von 150 bis 260°C. Die so erhaltenen Diglykolester von Carbonsäuren werden unter vermindertem Druck bei Temperaturen von 230 bis 270°C vorkondensiert. Solche Vorkondensate haben eine relative Viskosität von mindestens 1,05 (gemessen als 0,5 gewichtsprozentige Lösung in einem Gemisch aus Phenol und o-Dichlorbenzol im Gewichtsverhältnis 3: bei 25°C). In der Regel geht man von Polyestervorkondensaten aus mit einer relativen Viskosität von 1,05 bis 1,2. Die Herstellung solcher Vorkondensate wird beispielsweise beschrieben in der DE—A 25 14 116.

Die Kondensation der Polyestervorkondensate zu hochmolekularen Polyestern wird bei Temperaturen von 270 bis 340°C unter vermindertem Druck durchgeführt. Vorteilhaft hält man Drücke von 0,133 bis 2,66 mbar ein. Es versteht sich, daß die bei der Kondensation abspaltenden Diole fortlaufend aus dem Reaktionsgemisch entfernt werden.

Ein wesentliches Merkmal der Erfindung ist es, daß man die Kondensation zunächst bei einer Temperatur von 290 bis 340°C beginnt und mit fortschreitender Kondensation die Temperatur erniedrigt. Mit der Maßgabe, daß die Endtemperatur mindestens 10°C, vorteilhaft 30°C über dem Schmelzpunkt des jeweils hergestellten Polyesters liegt. Die Anfangstemperatur richtet sich auch nach der Art des Vorkondensats. Bei Polyethylenterephthalat haben sich Anfangstemperaturen von 320 bis 340°C besonders bewährt, während sich bei der Herstellung von Polybutylenterephthalat Temperaturen von 290 bis 310°C besonders günstig erwiesen haben. Vorteilhaft senkt man während der Kondensation die hohe Anfangstemperatur um 30 bis 50°C. Das Absinken der Temperatur erfolgt kontinuierlich. Die Endtemperatur richtet sich im wesentlichen nach dem Schmelzpunkt des erzeugten Polyesters und soll so hoch über dessen Schmelzpunkt liegen, damit keine Verfestigung eintritt und die weitere Verarbeitung nicht behindert wird. In der Regel haben sich Temperaturen etwa 10°C über dem Schmelzpunkt als brauchbar erwiesen.

Das erfindungsgemäße Verfahren läßt sich auch vorteilhaft durchführen, indem man die Temperatur durch adiabatische Arbeitsweise im Verlauf der Kondensation kontinuierlich um 30 bis 50°C senkt.

Diese Arbeitsweise hat den Vorteil, daß sich die optimale Reaktionstemperatur weitgehend selbständig einstellt. Ferner hat das neue Verfahren den Vorteil, daß durch den nachträglichen Einbau eines Wärmeaustauschers vor die Kondensationsstufe der Polyesterkondensation nach einem optimalen Temperaturzeitprofil in konventionellen Kondensationsreaktoren durchgeführt werden kann.

Zunächst wird die niedrigviskose Polyestervorkondensatschmelze vor dem Eintritt in die Polykondensationszone um 30 bis 50°C über die Temperatur erhitzt, welche der fertig kondensierte Polyester nach der Polykondensation aufweisen soll. Zweckmäßig wird die Temperatur des Polyestervorkondensats zunächst soweit erhöht, wie sie bei der nachfolgenden Polykondensation absinkt. Das Erhitzen der Polyestervorkondensatschmelze erfolgt vorteilhaft kurzzeitig in einem Wärmetauscher, z.B. Röhren- oder Plattenwärmetauscher oder in einer ähnlichen geeigneten Vorrichtung.

Nach dem Eintritt der so erhitzten Polyestervorkondensatschmelze in die Kondensationszone setzt die Kondensation infolge von Umesterungsreaktionen ein. Die für die Reaktion und die Verdampfung des freigesetzten Diols und eventuellen Nebenprodukten, beispielsweise Tetrahydrofuran, bei der Kondensation von butandiol-1,4-haltigen Polyestern erforderliche Wärmeenergie wird dem Wärmeinhalt der Schmelze entnommen. Dadurch sinkt die Temperatur in dem Maße, wie die Kondensationsreaktion fortschreitet. Hierdurch stellt sich somit die optimale Reaktionstemperatur weitgehend selbständig ein. Demzufolge werden auch die Flächen in der Polykondensationszone, die mit der Schmelze in Berührung kommen, bei der Temperatur gehalten, welche der Polyester nach Polykondensation aufweisen soll, bis zu einer Temperatur, die die Endtemperatur der Polykondensation bis zu 10°C unterschreitet. Gegen Ende Der Polykondensation weist dann die Schmelze eine Temperatur auf, die den mit der Schmelze in Berührung stehenden Flächen entspricht oder infolge der Aufnahme von mechanischer Energie bei der Bewegung der Schmelze die Temperatur der Berührungsflächen je nach Konstruktion der verwendeten Vorrichtung um 5 bis 10°C übersteigt.

Vorzugsweise wird die Kondensation in dünner Schicht durchgeführt. Erfindungsgemäß seien als dünne Schichten solche mit bis zu 7 mm schichtdicke verstanden.

Polyester, die nach dem Verfahren der Erfindung erhältlich sind, eignen sich zur Herstellung von geformten Gebilden, wie Fäden, Folien, spritzgegossenen oder extrudierten Teilen, ferner für Überzüge.

Das Verfahren nach der Erfindung sei in den folgenden Beispielen veranschaulicht.

### Beispiele

(a) Herstellung des Polyestervorkondensats

In einem 2-Liter-Rundkolben, ausgestattet mit Rührer, Stickstoffeinleitung und Füllkörperkolonne, wurden 1 000 g Dimethylterephthalat und 685 g Butandiol-1,4 auf 130°C erhitzt. Bei dieser Temperatur wurde unter Rühren 1,5 g Tetrabutylorthotitanat als Umesterungskatalysator zugegeben. Alsbald begann die Destillation von Methanol. Die Temperatur wurde innerhalb von 2 Stunden auf 220°C erhöht. Nach dieser Zeit waren 330 g Methanol abdestilliert und die Umesterungsreaktion beendet. Nun wurde die Füllkörperkolonne durch einen absteigenden Kühler ersetzt und innerhalb von 15 Minuten die Temperatur auf 250°C erhöht. Danach wurde unter schnellem Rühren der Druck stetig und linear innerhalb von 40 Minuten auf 13,3 mbar abgesenkt. Bei diesem Druck wurde noch 5 Minuten gerührt und dann die Vorkondensation durch Aufheben des Vakuums mit Stickstoff beendet.

Das Vorkondensat wurde unter Stickstoff in eine Schale gegossen, wo es schnell erstarrte. Die relative Viskosität dieses Vorkondensats betrug 1,13.

(b) Kondensation

Die Kondensation erfolgte in einem mit Rührer, Kühler, Stickstoffeinleitung ausgestatteten 250 ml großen Rundkolben, welcher durch ein Woodsches-Metallbad geheizt wurde. Zur Nachkondensation wurden 50 g des Vorkondensats unter Stickstoff bei der gewählten Nachkondensationstemperatur aufgeschmolzen. Nach dem Aufschmelzen und dem Temperaturausgleich wurde der Kolben schnell auf einen Druck von ca. 0,67 mbar evakuiert. Die Rührgeschwindigkeit wurde der jeweiligen Viskosität angepaßt. Nach einer vorgegebenen Zeit wurde die Nachkondensation durch Aufheben des Vakuums mit stickstoff unterbrochen.

Die Ergebnisse sind in der folgenden Tabelle aufgeführt.

|  | Temperatur [°C] | Zeit min | $\eta_{rel}$ |
|---|---|---|---|
| Vergleichsbeispiele | | | |
| 1 | 255 | 15 | 1,26 |
| 2 | 270 | 15 | 1,38 |
| 3 | 280 | 15 | 1,44 |
| 4 | 290 | 15 | 1,37 |
| Beispiele | | | |
| 1 | 295 | 0.—2. min | |
|  | 290 | 2.—4. min | |
|  | 285 | 4.—6. min | |
|  | 280 | 6.—8. min | |
|  | 275 | 8.—11. min | |
|  | 270 | 11.—14. min | 1,77 |
| 2 | 295 | 0.—2. min | |
|  | 290 | 2.—4. min | |
|  | 285 | 4.—6. min | |
|  | 280 | 6.—8. min | |
|  | 275 | 8.—10. min | |
|  | 270 | 10.—12. min | 1,67 |

Die Vergleichsbeispiele 1 bis 4 zeigen die relative Viskosität als Funktion der Nachkondensationstemperatur nach einer Reaktionszeit von 15 Minuten. Nach dem Stand der Technik wurden die Temperaturen während der Polykondensationszeit konstant gehalten. Wenn die Temperatur von 255°C auf 280°C erhöht wird, werden auch höhere relative Viskositäten erhalten und damit ein höherer Polykondensationsgrad. Bei weiterer Erhöhung der Temperatur auf 290°C sinkt die relative Viskosität wieder ab, und es wird ein gelblich verfärbtes Produkt erhalten.

Die Beispiele 1 und 2 wurden dagegen nach dem erfindungsgemäßen Verfahren durchgeführt. Dazu wurde das Metallbad auf 295°C vorgeheizt und nach dem Aufschmelzen des Vorkondensats die Nachkondensationsreaktion begonnen. Im Verlauf der Nachkondensation wurde die Temperatur des Heizbades in den in der Tabelle angegebenen Schritten erniedrigt. Nach dem erfindungsgemäßen Verfahren wurde innerhalb von 12 Minuten eine relative Viskosität von 1,67 erreicht (Beispiel 2).

### Beispiel 3

A. Herstellung eines Polybutylenterephthalat-Vorkondensats

In einem Rührkessel mit 40 l Inhalt, ausgestattet mit Rührer, Stickstoffeinleitung und Dephlegmator wurden 20 kg Dimethylterephthalat und 13,7 kg Butandiol-1,4 auf 130°C erhitzt. Bei dieser Temperatur wurden unter Rühren 30 g Tetrabutylorthotitanat als Umesterungskatalysator zugegeben. Danach begann die Destillation von Methanol. Die Temperatur wurde innerhalb von 2 Stunden auf 220°C erhöht. Nach dieser Zeit waren 6,6 kg Methanol abdestilliert und die Umesterungsreaktion beendet. Innerhalb von 30 Minuten wurde die Temperatur auf 250°C erhöht. Danach wurde der Druck stetig und linear innerhalb von 45 Minuten auf 13,3 mbar abgesenkt. In diesem Stadium betrug die relative Viskosität des so erhaltenen Polybutylenterephthalat-Vorkondensats 1,12.

B. Kondensation des Polybutylenterephthalat-Vorkondensats nach dem erfindungsgemäßen Verfahren

Das Polybutylenterephthalat-Vorkondensat wurde durch einen Platten-Wärmeaustauscher gedrückt und dabei auf 285°C erwärmt und in einem auf 285°C mit Diphyldampf vorgeheizten Kondensationskessel von 40 l Inhalt geleitet. Dieser Aufheizvorgang nahm 10 Minuten in Anspruch. Danach wurde der Fluß des Diphyldampfs unterbrochen und unter schnellem Rühren schlagartig ein Vakuum von 1,33 mbar im Kondensationskessel hergestellt.

Während der nun ablaufenden Polykondensation sank die Schmelztemperatur innerhalb von 33 Minuten exponentiell auf 250°C ab. Von diesem Zeitpunkt an wurde die Temperatur durch Diphyldampf auf 250°C gehalten. Nach weiteren 21 Minuten wurde das Vakuum aufgehoben und die Schmelze unter Stickstoffdruck ausgetragen. Die relative Viskosität des so hergestellten Polybutylenterephthalats betrug 1,72.

### Vergleichsbeispiel 5

In diesem Versuch wurde das Polybutylenterephthalat-Vorkondensat ebenfalls innerhalb von 10 Minuten durch den Platten-Wärmetauscher gedrückt, die Temperatur aber auf 250°C gehalten. Der Kondensationskessel war auf 250°C vorgeheizt. Bei dieser Temperatur wurde nach dem Füllvorgang unter schnellem Rühren schlagartig ein Vakuum von 1,33 mbar hergestellt und unter diesen Bedingungen 54 Minuten Kondensiert. Nach 54 Minuten Kondensationszeit wurde das Vakuum aufgehoben und die Schmelze ausgetragen. Die relative Viskosität betrug nur 1,49.

### Patentansprüche

1. Verfahren zur Herstellung von hochmolekularen linearen Polyestern, die sich von Dicarbonsäuren oder deren esterbildenden Derivaten und Diolen ableiten und die zu wenigstens 50 Mol% aus Polyäthylen- oder Polybutylenterephthalat-Einheiten bestehen, durch Kondensation von Polyestervorkondensaten mit einer relativen Viskosität von mindestens 1,05 bei Temperaturen von 270 bis 340°C unter vermindertem Druck, wobei man während der Kondensation die Temperatur erniedrigt, dadurch gekennzeichnet, daß man das Polyestervorkondensat kurzzeitig auf eine Temperatur von 290 bis 340°C erhitzt und dann durch Verdampfen des freigesetzten Diols unter einem Druck von 0,133 bis 2,66 mbar Temperatur um 30 bis 50°C erniedrigt mit der Maßgabe, daß die Endtemperatur mindestens 10°C über dem Schmelzpunkt des hergestellten Polyesters liegt.

2. Verfahren nach Anspruch 1, dadurch gekennzeichnet, daß man die Kondensation in dünner Schicht durchführt.

3. Verfahren nach den Ansprüchen 1 und 2, dadurch gekennzeichnet, daß man die Temperatur durch adiabatische Arbeitsweise im Verlauf der Kondensation kontinuierlich um 30 bis 50°C senkt.

### Claims

1. A process for the manufacture of high molecular weight linear polyesters which are derived from dicarboxylic acids or their ester-forming derivatives and from diols, and consist to the extent of at least 50 mole% of polyethylene or polybutylene terephthalate units, by condensing polyester precondensates, having a relative viscosity of at least 1.05, under reduced pressure at from 270 to 340°C, the temperature being lowered as the condensation progresses, characterized in that the polyester precondensate is heated for a short period at a temperature of from 290 to 340°C and then the temperature is lowered by from 30 to 50°C by vaporizing the liberated diol under a pressure of from 0.133 to 2.66 millibars, with the proviso that the final temperature is at least 10°C above the melting point of the polyester produced.

2. A process as claimed in claim 1, characterized in that the condensation is carried out in a thin layer.

3. A process as claimed in claims 1 and 2, characterized in that the temperature is lowered continuously, during the condensation, by from 30 to 50°C, by carrying out the process adiabatically.

**0 000 918**

Revendications

1. Procédé de préparation de polyesters linéaires de poids moléculaire élevé, dérivés d'acides dicarboxyliques ou de dérivés susceptibles de former des esters de ceux-ci et de diols et composés à raison d'au moins 50 % molaires d'unités poly(téréphtalate d'ethylène) ou poly(téréphtalate de butylène), par condensation de pré-condensats de polyesters d'une viscosité relative d'au moins 1,05 à des températures comprises entre 270 et 340°C et sous pression réduite avec abaissement progressif de la température durant la condensation, caractérisé en ce que l'on chauffe le pré-condensat de polyester pendant un court laps de temps entre 290 et 340°C, puis l'on provoque, par l'évaporation du diol libéré sous une pression entre 0,133 et 2,66 millibars, un abaissement de la température de 30 à 50°C, la température finale devant cependant être de 10°C au moins supérieure au point de fusion du polyester préparé.

2. Procédé suivant la revendication 1, caractérisé en ce que la condensation est réalisée en couche mince.

3. Procédé suivant l'une des revendications 1 et 2, caractérisé en ce que la température est abaissée adiabatiquement et de façon continue de 30 à 50°C durant la condensation.